# EUROPÄISCHE PATENTANMELDUNG

(11) **EP 1 107 040 A1**
(43) Veröffentlichungstag der Anmeldung: **13.06.2001**
(21) Anmeldenummer: 99890374.4
(22) Anmeldetag: 03.12.1999
(51) Int. Cl.: G02B 27/01

(54) **Sichtgerät für Infrarotbilder**

(71) Anmelder: INFRA-VISION Visualisierungs- und Kommunikationssysteme GmbH, 9500 Villach (AT)
(72) Erfinder: del Bianco, Alessandro, 9500 Villach (AT); Paul, Christian, 9500 Villach (AT); Oberwalder, Hermann, 9701 Rothenthurn (AT); Reininger, Franz, 9500 Villach (AT)
(74) Vertreter: Hehenberger, Reinhard, Dipl.-Ing.

(57) **Zusammenfassung**

Ein Sichtgerät zum Anzeigen von mit einer Kamera aufgenommenen Bildern weist wenigstens einen Projektor (2, 3), z.B. einen LCD-Schirm, auf, dessen Bild auf einem teilweise transparenten Reflektor (6, 7) zu sehen ist, der Umgebungslicht (10) von der hinter der Reflektorfläche (11) liegenden Seite durchläßt. Die Kamera ist für das Aufnehmen nicht sichtbaren Lichtes (10) ausgeführt (z.B. eine Infrarotkamera) und die Lichtdurchlässigkeit des Reflektors (6, 7) beträgt wenigstens 80%, vorzugsweise wenigstens 85% und besonders bevorzugt zwischen 90% und 98%.

Das erfindungsgemäße Sichtgerät ist so aufgebaut, daß sich der Reflektor (6, 7) direkt vor den Augen (8) des Feuerwehrmannes befinden kann, da die Sicht auf die Umgebung durch die hohe Lichtdurchlässigkeit des Reflektors (6, 7) kaum beeinträchtigt wird, d.h. der Feuerwehrmann sieht bei Lichtverhältnissen, die es ihm erlauben, die reale Umgebung zu erkennen, diese Umgebung direkt, wogegen bei schlechten Sichtverhältnissen mit geringerer Intensität des natürlichen Lichtes das auf dem Reflektor sichtbare Bild der Kamera besser sichtbar ist.

## Beschreibung

Die Erfindung betrifft ein Sichtgerät zum Anzeigen von mit einer Kamera aufgenommenen Bildern mit einem Projektor, wobei das Bild des Projektors auf einem teilweise transparenten Reflektor zu sehen ist, der Licht von der hinter der Reflektorfläche liegenden Seite durchläßt.

Feuerwehrmänner müssen häufig unter sehr schwierigen Bedingungen, wie Dunkelheit oder starker Sichtbehinderung durch Rauch, teilweise mit schwerer Ausrüstung Personen suchen und sich zum Brandherd vorarbeiten, was sehr große Gefahren mit sich bringt. Durch die schwere Atemschutzausrüstung in der Bewegungsfreiheit und Sicht eingeschränkt und durch die starke Rauchentwicklung oder Dunkelheit ist es für den Feuerwehrmann oft nicht möglich, Gefahrenstellen und Hindernisse rechtzeitig zu erkennen. Der Feuerwehrmann ist daher einzig und allein auf seinen Tastsinn angewiesen.

Um dieses Problem zu lösen, wurden in der Vergangenheit schon mehrere Systeme angeboten, die mit Infrarotkameras arbeiten, durch welche der Feuerwehrmann nicht auf sichtbares Licht zum Erkennen der Umgebung angewiesen ist. Insbesondere die Infrarotstrahlung von Menschen und Brandherden läßt sich mit einer Infrarotkamera gut aufnehmen und darstellen. Einige der am Markt befindlichen Systeme weisen jedoch insoferne erhebliche Nachteile auf, als diese mehr oder weniger schwere Kameras aufweisen, die der Feuerwehrmann in der Hand tragen muß, und an denen auch ein Bildschirm angeordnet ist, an denen der Feuerwehrmann das von der Infrarotkamera aufgenommene Bild erkennen kann. Der erhebliche Nachteil des Systems liegt darin, daß der Feuerwehrmann das Gerät in der Hand tragen muß und somit höchstens eine Hand frei hat, was unter den schwierigen Bedingungen eines Brandeinsatzes einen erheblichen Nachteil bedeutet. Ein weiteres am Markt befindliches System weist einen undurchsichtigen Schirm auf, der vor dem Gesicht des Feuerwehrmannes angeordnet ist, und der Feuerwehrmann daher nurmehr das von der Infrarotkamera aufgenommene und am Schirm dargestellte Bild sieht, was eine erhebliche Beschränkung des Sichtfeldes des Feuerwehrmannes bedeutet und dem Feuerwehrmann durch den undurchsichtigen Bildschirm auch der direkte Sichtkontakt zur Umgebung genommen oder doch erheblich beschränkt wird.

Der Erfindung liegt daher die Aufgabe zu Grunde, ein besonders für Feuerwehrmänner geeignetes Sichtgerät zur Verfügung zu stellen, das es ihm ermöglicht, das von der Kamera aufgenommene Bild gut zu erkennen, ohne den Blickwinkel nennenswert ändern zu müssen, und gleichzeitig die unmittelbare Sicht der Umgebung so wenig wie möglich behindert.

Gelöst wird diese Aufgabe mit einem Sichtgerät mit den Merkmalen des Anspruches 1.

Das erfindungsgemäße Sichtgerät ist so aufgebaut, daß sich der Reflektor direkt vor den Augen des Feuerwehrmannes befinden kann, da die Sicht auf die Umgebung durch die hohe Lichtdurchlässigkeit des Reflektors kaum beeinträchtigt wird, d.h. der Feuerwehrmann sieht bei Lichtverhältnissen, die es ihm erlauben, die reale Umgebung zu erkennen, diese Umgebung direkt, was bei guten oder akzeptablen normalen Sichtverhältnissen in der Praxis die beste Wahrnehmungsform für den Feuerwehrmann darstellt.

Verschlechtern sich allerdings die tatsächlichen Sichtverhältnisse, d.h. wird das sichtbare Licht der Umgebung weniger, wird auch die Intensität des natürlichen Lichtes immer geringer, so daß das auf dem Reflektor sichtbare Bild der Kamera immer besser sichtbar wird. Bei völliger oder nahezu völliger Dunkelheit sieht der Feuerwehrmann dann praktisch ausschließlich das vom Projektor auf den Reflektor projizierte Bild, so daß er auch in diesem Fall seine Umgebung ausreichend wahrnehmen kann.

Das vom erfindungsgemäßen Sichtgerät erzeugte Bild ist daher nur dann ein für den Feuerwehrmann sichtbares Bild, wenn die Umgebung sonst nicht oder nur mehr schlecht wahrnehmbar wäre. Dadurch, daß das Sichtgerät aber mit einem Reflektor mit sehr hoher Lichtdurchlässigkeit ausgestattet ist, bleibt für den Feuerwehrmann das reale Bild bei guten oder annehmbaren Sichtverhältnissen nahezu unbeeinträchtigt sichtbar.

Das erfindungsgemäße Sichtgerät weist gegenüber den bekannten Sichtgeräten, die bei der Brandbekämpfung gegenwärtig eingesetzt werden, den erheblichen Vorteil auf, daß es direkt vor den Augen des Feuerwehrmannes in Form einer Brille positioniert und z.B. auf dem Helm oder einer Schutzmaske befestigt sein kann, ohne daß es die Sicht in nennenswertem Ausmaß behindert, und der Feuerwehrmann auch beide Hände frei hat.

Aus der US-A-5 949 583 ist ein gattungsgemäßes Sichtgerät bekannt, das einen transparenten Reflektor aufweist. Der Bilderzeuger der US-A-5 949 583 projiziert dabei Bilder von Computern, Videokassetten, Laserdisks oder Videokameras auf den Reflektor. Damit der Benutzer auch die Umgebung noch wahrnehmen kann, ist der Reflektor transparent. Die Lichtdurchlässigkeit des Reflektors für das Umgebungslicht ist dabei jedoch so eingestellt, daß Licht höherer Intensität nur in einem gefilterten Bereich des sichtbaren Lichtes durchgelassen wird, der Benutzer daher im wesentlichen nur mehr ein monochromes Bild der Umgebung wahrnimmt, was eine erhebliche Beschränkung darstellt. Soferne nicht nur in bestimmten Spektralbereichen gefiltertes Umgebungslicht durchgelassen werden soll, der Benutzer daher "natürliches" Licht sieht, ist in der US-A-5 949 583 angegeben, daß nur sehr stark abgeschwächtes Licht durchgelassen werden soll, wobei die Durchlässigkeit z.B. nur 1% betragen soll.

Hieraus ergibt sich, daß bei der US-A-5 949 583 das vom Projektor erzeugte Bild im Vordergrund steht und das Umgebungslicht nur aus dem Grund durchgelassen werden soll, damit der Benutzer den Kontakt zur Umgebung nicht völlig verliert.

Gerade dies ist für den Einsatzzweck des erfindungsgemäßen Sichtgerätes bei Feuerwehrmännern unerwünscht, da der unmittelbaren Wahrnehmung der Umgebung durch den Feuerwehrmann so weit wie möglich unbedingt der Vorzug zu geben ist, wogegen das von der Kamera aufgenommene Bild nur eine Ergänzung des realen Bildes darstellen soll, wenn dieses durch den Feuerwehrmann nicht mehr oder nicht mehr ausreichend wahrgenommen werden kann.

Als Projektor kann beim erfindungsgemäßen Sichtgerät jede Einrichtung zur Bilderzeugung herangezogen werden, wie LCD-Schirme, LED-Schirme, CRT-Schirme, oder Laserprojektoren, soferne sie geeignet sind, das von der Kamera aufgenommene Bild auf einen Reflektor zu projizieren. Als Kameras können auch andere als Infrarotkameras, z.B. CCD-Kameras, eingesetzt werden, soferne sie in der Lage sind, Bilder in einem Spektralbereich außerhalb des für Menschen sichtbaren Lichtes aufzunehmen und dadurch den Menschen unter den oben erwähnten Bedingungen zu unterstützen, wenn das für den Menschen sichtbare Licht schlechter bzw. weniger wird oder ganz entfällt.

Im Rahmen der Erfindung kann vorgesehen sein, daß der Reflektor ein HohlReflektor ist und daß im Strahlengang zwischen dem Projektor, dem Reflektor und dem Auge des Betrachters ein teilweise transparenter, zum Strahlengang geneigter Spiegel liegt, wie dies z.B. aus der US-A-5 949 583 bekannt ist.

Eine gute Darstellung des mit der Kamera aufgenommenen Bildes bzw. "Einblendung" desselben in das vom Benutzer wahrgenommene Bild der Umgebung ist auch dann möglich, wenn ein Filter vorgesehen ist, der einen begrenzten Bereich des sichtbaren, auf den Reflektor auftreffenden Lichtes herausfiltert und wenn der Projektor ein Bild in diesem herausgefilterten Bereich darstellt. Der die Reflektorfläche aufweisende Reflektor kann als sogenannter dichroic-Filter und/oder als notch-Filter ausgeführt sein. Das Funktionsprinzip dieses Filters ist, das in einem bestimmten Winkel ankommende Licht, welches einen bestimmten begrenzten Spektralbereich umfaßt, zu reflektieren, wogegen Licht, das diesen Spektralbereich nicht umfaßt und unter einem anderen Winkel auf diesen Filter auftrifft, transmittiert, d.h. durch den Filter durchtreten kann. Grundsätzlich ist es auch möglich, einen derartigen Filter vor dem die Reflektorfläche aufweisenden Reflektor anzuordnen, so daß bereits entsprechend gefiltertes Licht auf diesen Reflektor auftrifft.

Der Projektor projiziert dann ein Bild in genau diesem Spektralbereich auf die Reflektorfläche, d.h. daß das projizierte Bild das vom Benutzer gesehene Bild der realen Umgebung in genau dem herausgefilterten Spektralbereich ergänzt.

Vorzugsweise umfaßt bei dieser Ausführungsform der Erfindung der herausgefilterte Bereich etwa 100 nm, vorzugsweise etwa 50 nm. Der herausgefilterte Bereich kann dabei im blauen, grünen oder roten Spektrum des sichtbaren Lichtes liegen, also im Bereich von etwa 50 bis 100 nm um eine Wellenlänge von 650 nm (rot), 540 nm (grün) oder 460 nm (blau). Es versteht sich, daß der herausgefilterte Bereich natürlich auch in Bereichen zwischen oder am Rand der angegebenen Wellenlängen des roten, grünen oder blauen Lichtes liegen kann.

Im Rahmen der Erfindung kann dabei vorgesehen sein, daß entweder nur eine einziger Reflektor vorgesehen ist oder daß das Sichtgerät zwei Reflektoren aufweist, wobei jedem Reflektor ein Projektor zugeordnet sein kann.

Alternativ ist es aber auch möglich, daß für beide Reflektoren ein einziger Projektor vorgesehen ist, der das Bild über einen Strahlteiler, z.B. ein Prisma, auf beide Reflektoren projiziert, was den Vorteil mit sich bringt, daß nur ein einziger der relativ teuren Projektoren verwendet werden muß.

Das erfindungsgemäße Sichtgerät kann in einer Ausführungsform der Erfindung direkt auf dem Helm des Feuerwehrmannes angeordnet sein, wobei auch die Kamera, vorzugsweise mittig, auf dem Helm angeordnet ist. Alternativ kann die Kamera aber auch auf dem Sichtgerät angeordnet sein, so daß das Sichtgerät mit der Kamera eine kompakte Einheit bildet, die bei Bedarf über einen geeigneten Adapter auf einem Helm montierbar ist, oder wie eine Brille z.B. über eine Schutzmaske aufgesetzt werden kann.

Um die Ausfallsicherheit des erfindungsgemäßen Sichtgerätes zu erhöhen, kann des weiteren vorgesehen sein, daß jedem Projektor eine Kamera zugeordnet ist, was den Vorteil bietet, daß, falls eine Kamera beschädigt oder zerstört wird, noch eine zweite Kamera vorhanden ist, die auf einer der beiden Reflektoren nach wie vor ein Bild liefert.

Wenn zwei Kameras vorgesehen sind, besteht auch die Möglichkeit, ein räumliches Bild darzustellen, was dem Feuerwehrmann die Orientierung bzw. das Schätzen von Entfernungen weiter erleichtert.

Weitere Merkmale und Vorteile der vorliegenden Erfindung ergeben sich aus der nachfolgenden Beschreibung von Ausführungsbeispielen der Erfindung unter Bezugnahme auf die Zeichnungen. Es zeigt:
- Fig. 1 und 2: eine erste Ausführungsform der Erfindung in Draufund Seitenansicht mit zwei Projektoren und zwei Reflektoren, wobei die Projektoren im Bereich unterhalb der Reflektor angeordnet sind,
- Fig. 3 und 4: eine zweite Ausführungsform der Erfindung in Drauf- und Seitenansicht mit zwei Projektoren und zwei Reflektoren, wobei die Projektoren seitlich außerhalb der Reflektor angeordnet sind,
- Fig. 5 und 6: eine dritte Ausführungsform der Erfindung in Drauf- und Seitenansicht mit zwei Projektoren und zwei Reflektoren, wobei die Projektoren im Bereich zwischen den Reflektoren angeordnet sind, und
- Fig. 7 und 8: eine vierte Ausführungsform der Erfindung in Drauf- und Seitenansicht mit einem Projektor, der das Bild über ein Prisma auf zwei Reflektor wirft.

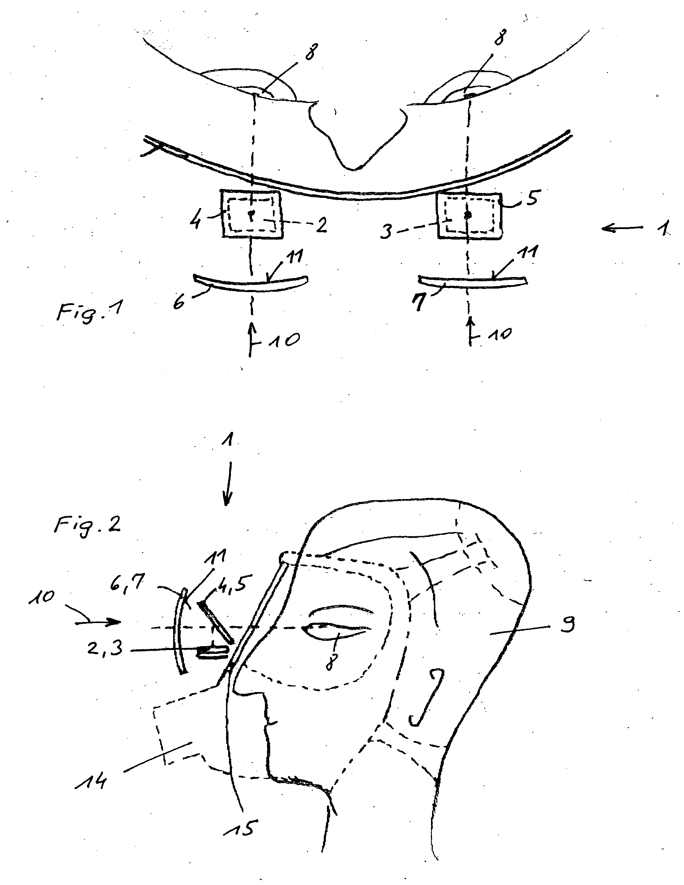

Die in den Fig. 1 bis 6 dargestellten Ausführungsformen eines erfindungsgemäßen Sichtgerätes 1 weisen als Gemeinsamkeit zwei Bilderzeuger 2 und 3 in Form von hintergrundbeleuchteten LCD-Displays auf, die über zwei halbtransparente Spiegel 4 und 5 ein Bild auf zwei Reflektoren in Form von Hohlspiegeln 6 und 7 projizieren. Von diesen Hohlspiegeln 6 und 7 wird ein Teil des Lichtes reflektiert und gleichzeitig das Bild vergrößert. Die Hohlspiegel 6 und 7 weisen eine dem Auge 8 des Betrachters zugewandte Reflektorfläche 11 auf, auf welchen das Licht der Projektoren 2 und 3 zu sehen ist. Der von den Hohlspiegeln 6 und 7 reflektierte Teil des Lichtes trifft wieder auf die halbtransparenten Spiegel 4 und 5, wobei der die Spiegel 4 und 5 durchdringende Teil des Lichtes auf die Augen 8 des Betrachters 9 nur symbolisch dargestellt ist, fällt. Die Hohlspiegel 6 und 7 sind so ausgeführt, daß Umgebungslicht, das durch die Pfeile 10 symbolisch dargestellt ist, mit nur geringer Schwächung durchgelassen wird, so daß wenigstens 80%, vorzugsweise wenigstens 90% und idealerweise zwischen 90% und 95% des sichtbaren Lichtes in Richtung der Pfeile 10 durch die Hohlspiegel 6 und 7 durchtreten kann. In einigen Anwendungsfällen kann der Anteil des durchgelassenen, sichtbaren Lichtes auch mehr als 95%, beispielsweise 97%, 98% oder 99% betragen.

Das durch die Hohlspiegel 6 und 7 durchtretende Umgebungslicht tritt ebenso wie das an den Reflektorflächen 11 reflektierte Licht der Projektoren 2 und 3 durch die halbtransparenten Spiegel 4 und 5 und kann daher vom Betrachter sehr gut wahrgenommen werden.

Durch den sehr hohen Anteil des Umgebungslichtes, der durch die Hohlspiegel 6, 7 durchtreten kann, wird bei normalem Umgebungslicht das reale Bild der Umgebung eine wesentlich höhere Intensität haben, als das von den Projektoren 2, 3 auf die Reflektorflächen 11 projizierte Bild, so daß letzteres praktisch nicht wahrgenommen werden kann. Je mehr die Intensität des Umgebungslichtes jedoch abnimmt, umso stärker erscheint im Verhältnis dazu das reflektierte Licht der Projektoren 2, 3, so daß dieses mit abnehmender Stärke des Umgebungslichtes immer besser wahrgenommen werden kann und somit das reale Bild der Umgebung immer mehr unterstützt bzw. ersetzt.

Auf Grund der Tatsache, daß die Hohlspiegel 6, 7 das Umgebungslicht kaum schwächen, beeinträchtigen diese und ebenso die halbtransparenten Spiegel 4, 5 die "normale" Sicht der Umgebung nicht nennenswert, wenn ausreichend gute Sichtverhältnisse vorliegen, so daß es zu keiner unnötigen Sichtbehinderung des Feuerwehrmannes kommt.

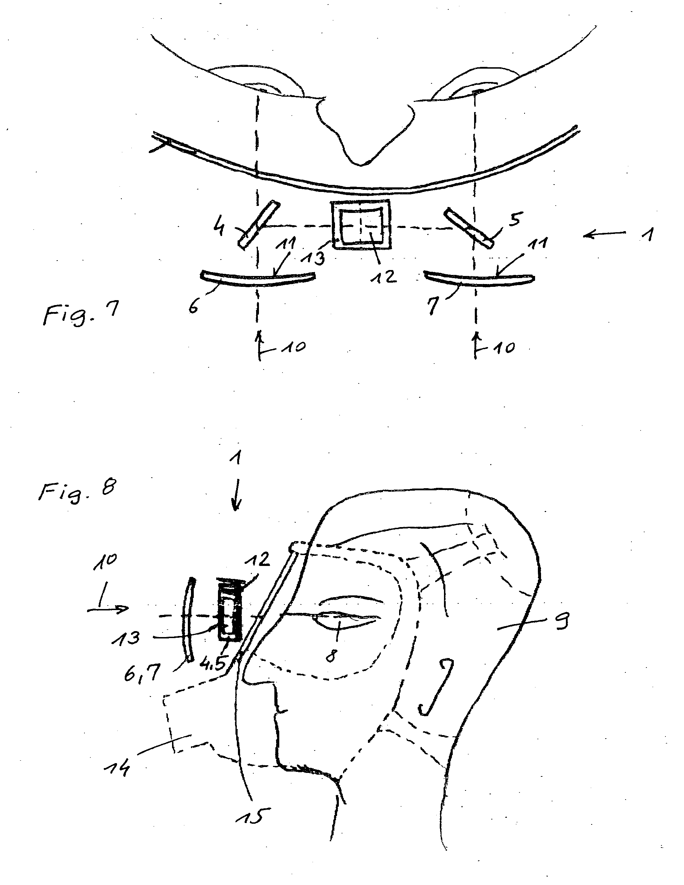

Die Ausführungsform von Fig. 7 und 8 unterscheidet sich von der Ausführungsformen nach den Fig. 1 bis 6 hauptsächlich dadurch, daß nur ein einziger Projektor 12 im Mittelbereich über den Hohlspiegeln vorgesehen ist, der sein Licht über ein Prisma 13 auf die halbtransparenten Spiegel 4, 5 und weiter auf die Reflektorflächen 11 der Hohlspiegel 6, 7 wirft.

Wie in den Fig. 1 und 2 zu sehen ist, befinden sich bei den dort dargestellten Ausführungsformen die Projektoren 2 und 3 jeweils im Bereich unterhalb der halbtransparenten Spiegel 4, 5 bzw. Hohlspiegel 6, 7. Eine Anordnung oberhalb der Reflektoren bzw. halbtransparenten Spiegel ist natürlich ebenso möglich.

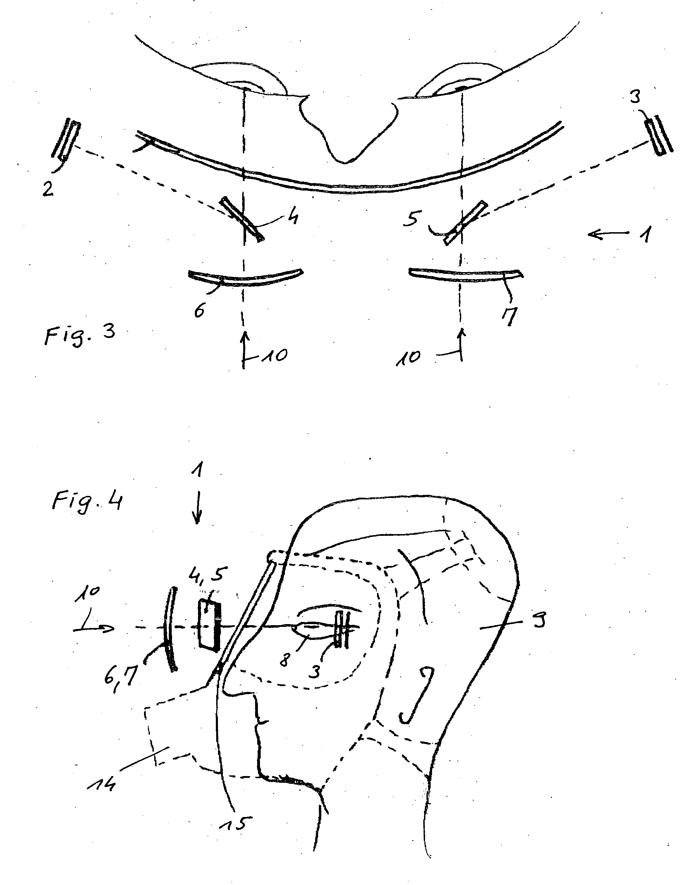

Demgegenüber sind bei der Ausführungsform von Fig. 3 und 4 die Projektoren 2 und 3 seitlich außerhalb der Halbspiegel 4 und 5 bzw. Hohlspiegel 6 und 7.

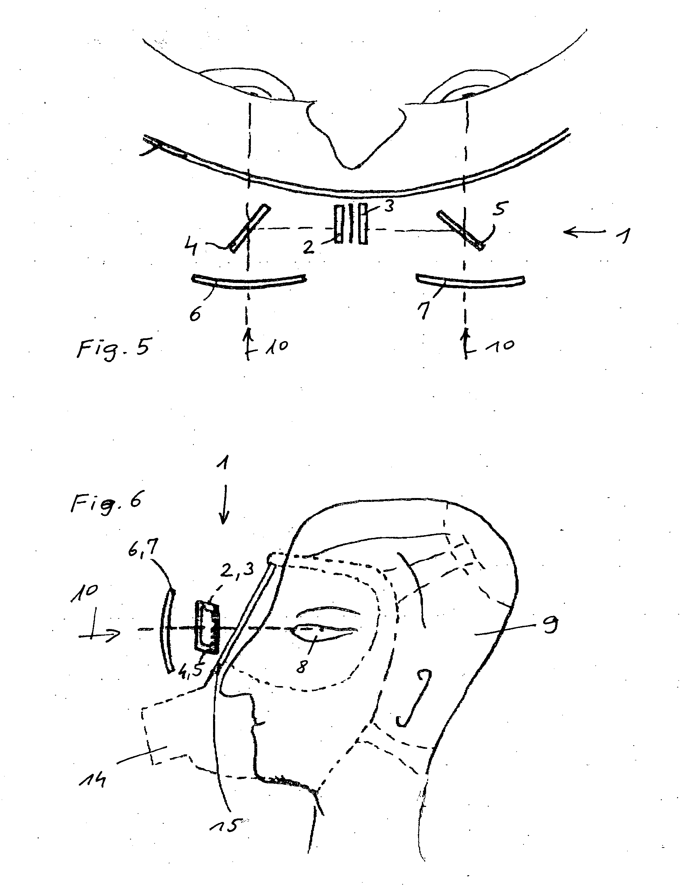

Bei der Ausführungsform von Fig. 5 und 6 wiederum sind die beiden Projektoren 2 und 3 im Mittelbereich zwischen den Halbspiegeln 4 und 5 bzw. den Hohlspiegeln 6 und 7 angeordnet.

Die gesamte Anordnung des erfindungsgemäßen Sichtgerätes kann als Baugruppe zu einer Art Brille zusammengefaßt sein, die entweder an einem Helm oder einer Atemschutzmaske 14 oder an beiden im Bereich vor den Augen 8 bzw. der Scheibe 15 der Atemschutzmaske 14 des Feuerwehrmannes positioniert ist.

Die Kamera ist über eine geeignete Schnittstelle und ein Kabel mit den beiden Projektoren 2 und 3 verbunden. Bei einer Ausführungsform, bei der zwei Kameras zum Einsatz kommen, ist jede Kamera über eine entsprechende Schnittstelle und ein Kabel mit jeweils einem Projektor 2, 3 verbunden.

Es ist auch möglich, über eine geeignete Datenverarbeitungs- und -übertragungseinrichtung, z.B. über Funk, weitere Daten, z.B. Gebäude- oder Lagepläne, an eine entsprechende Empfangseinrichtung und Datenverarbeitungseinrichtung des erfindungsgemäßen Sichtgerätes zu übertragen, um auch derartige Daten über die Projektoren 2, 3 darzustellen. Des weiteren können auch über beim Feuerwehrmann befindliche Sensoren weitere Daten, wie z.B. Temperaturen, Drücke usw., dargestellt werden.

## Patentansprüche

1. Sichtgerät zum Anzeigen von mit einer Kamera aufgenommenen Bildern mit einem Projektor (2, 3), wobei das Bild des Projektors (2, 3) auf einem teilweise transparenten Reflektor (6, 7) zu sehen ist, der Umgebungslicht (10) von der hinter der Reflektorfläche (11) liegenden Seite durchläßt, dadurch gekennzeichnet, daß die Kamera für das Aufnehmen nicht sichtbaren Lichtes (10) ausgeführt ist, und daß die Lichtdurchlässigkeit des Reflektors (6, 7) wenigstens 80%, vorzugsweise wenigstens 85% und besonders bevorzugt zwischen 90% und 98% beträgt.

2. Sichtgerät nach Anspruch 1, dadurch gekennzeichnet, daß der Projektor (2, 3) ein LCD-, LED- oder ein CRT-Schirm ist.

3. Sichtgerät nach Anspruch 1 oder 2, dadurch gekennzeichnet, daß die Kamera eine Infrarotkamera oder CCD-Kamera ist.

4. Sichtgerät nach einem der Ansprüche 1 bis 3, dadurch gekennzeichnet, daß die Lichtdurchlässigkeit über den gesamten, sichtbaren Spektralbereich im wesentlichen konstant ist.

5. Sichtgerät nach einem der Ansprüche 1 bis 4, dadurch gekennzeichnet, daß die Reflektorfläche (11) durch einen teilweise transparenten Hohlspiegel (6, 7) gebildet ist.

6. Sichtgerät nach einem der Ansprüche 1 bis 5, dadurch gekennzeichnet, daß im Strahlengang zwischen dem Projektor (2, 3), der Reflektorfläche (11) und dem Auge (8) des Betrachters ein teilweise transparenter, zum Strahlengang geneigter Spiegel (4, 5) liegt.

7. Sichtgerät nach einem der Ansprüche 1 bis 3, 5 oder 6, dadurch gekennzeichnet, daß ein Filter, z.B. ein dichroic-Filter oder ein notch-Filter, vorgesehen ist, der einen begrenzten Bereich des sichtbaren, auf den Reflektor (6, 7) auftreffenden Lichtes herausfiltert, und daß der Projektor (2, 3) ein Bild in diesem herausgefilterten Bereich darstellt.

8. Sichtgerät nach Anspruch 7, dadurch gekennzeichnet, daß der herausgefilterte Bereich etwa 100 nm, vorzugsweise etwa 50 nm umfaßt.

9. Sichtgerät nach Anspruch 7 oder 8, dadurch gekennzeichnet, daß der herausgefilterte Bereich im blauen, grünen oder roten Spektrum des sichtbaren Lichtes liegt.

10. Sichtgerät nach einem der Ansprüche 1 bis 9, dadurch gekennzeichnet, daß das Sichtgerät (1) zwei Reflektorflächen (11) aufweist.

11. Sichtgerät nach Anspruch 10, dadurch gekennzeichnet, daß für beide Reflektorflächen (11) ein einziger Projektor (12) vorgesehen ist, dessen Bild über einen Strahlteiler (13), z.B. ein Prisma, auf beiden Reflektorflächen (11) sichtbar ist.

12. Sichtgerät nach Anspruch 10, dadurch gekennzeichnet, daß jeder Reflektorfläche (11) ein Projektor (2, 3) zugeordnet ist.

13. Sichtgerät nach einem der Ansprüche 1 bis 12, dadurch gekennzeichnet, daß es auf einem Helm befestigt ist.

14. Sichtgerät nach Anspruch 13, dadurch gekennzeichnet, daß die Kamera auf dem Helm angeordnet ist.

15. Sichtgerät nach einem der Ansprüche 1 bis 14, dadurch gekennzeichnet, daß die Kamera auf dem Sichtgerät (1) angeordnet ist.

16. Sichtgerät nach einem der Ansprüche 1 bis 15, dadurch gekennzeichnet, daß jedem Projektor (2, 3) eine Kamera zugeordnet ist.
